# EUROPEAN PATENT APPLICATION

(11) **EP 3 125 454 A1**
(43) Date of publication of application: **01.02.2017**
(21) Application number: 15306221.1
(22) Date of filing: 27.07.2015
(51) Int. Cl.: H04L 1/00, G06F 19/00, H04L 1/08

(54) **DATA PROCESSING METHOD AND DEVICE FOR CORRECTING ERRORS IN DEFECTIVE COPIES OF A DATA PACKET**

(71) Applicant: Thomson Licensing, 92130 Issy-les-Moulineaux (FR)
(72) Inventor: Huetter, Ingo, 30982 Pattensen (DE); Blawat, Meinolf, 30659 Hannover (DE); Gaedke, Klaus, 30659 Hannover (DE); Chen, Xiaoming, 30659 Hannover (DE)
(74) Representative: Huchet, Anne

(57) **Abstract**

In storage/transmission systems, where multiple disturbed copies of initially identical data packets exist, erroneous copies are used to derive the initially error-free content from. A method (100) of operating a data processing device obtains (110), from a data transmission medium providing multiple copies of data packets, a plurality of defective copies of a data packet and compares (120) the defective copies. If code symbols at corresponding positions within at least two defective copies differ, the positions are identified (140) as a set of modification positions. A plurality of differently modified data packet copies is computed by modifying code symbol values at the modification positions using different modification patterns, and the contained error detection data is recalculated (150), the recalculated error detection data is evaluated (160), and one of the differently modified copies where the evaluating (160) indicates no error is selected (170) as corrected copy of the data packet.

## Description

### FIELD

The present disclosure is related to specific storage/transmission systems, where multiple possibly disturbed copies of initially identical data packets exist. More particularly, the present principles relate to the correction of errors in corresponding digital data that were stored or transmitted. Data processing methods and devices for correcting errors in defective copies of data packets are presented, as well as a corresponding computer program and program storage device.

### BACKGROUND

In typical storage/transmission systems the stored or sent data, e.g. provided in data packets, i.e. sequences of (e.g. binary or quaternary) code symbols, is available only once - therefore it has to be protected against distortions caused by the transmission medium or channel (which includes the transmission link or storage medium, as well as required channel encoding and decoding means). By applying suited error correction means, such as, for example, a forward error correction coding (FEC), the originally transmitted data can be recovered successfully even if parts of the data that can be recovered or obtained from the transmission channel or medium are disturbed, i.e. contain one or more errors.

Error correction algorithms require the addition of redundant code symbols to protect the data, i.e. to allow detection and correction of incorrect code symbols within the data. In the case of channels or mediums with a significantly high error rate, error correction algorithms usually used in storage/transmission systems, e.g. a Reed-Solomon error correction coding, require the addition of a high amount of redundancy to protect the data sufficiently, thereby reducing the amount of possible user data or payload data per data packet of constant size or length.

However, in specific storage or transmission systems multiple copies of the same data packets are provided anyway due to characteristics of the storage/transmission medium or channel and independently of, e.g., a request for retransmission issued by the receiver or decoder side.

An example for a storage/transmission technology where multiple copies or instances of same data packets are used is the storing/archiving of digital data in nucleic acid molecules, such as artificially generated DNA (Deoxyribonucleic acid). Here, the biochemical processing requires that multiple, e.g. hundreds or thousands of copies of the same (initially identical) oligos or oligonucleotides, i.e. artificially created synthetic DNA strands, have to be generated for storing in a container and later sequencing and data retrieval. This processing is error-prone and many, potentially all, data packet copies to be decoded that have been retrieved until a certain time of retrieving may be disturbed. For additional information on the technology of storing user data in artificially created DNA strands see "Next-generation digital information storage", Church et al., Science 337, 1628, 2012 [I] and "Towards practical, high-capacity, low-maintenance information storage in synthesized DNA", Goldman et al., Nature, vol. 494, 2013 [II].

The availability of multiple defective copies of data packets is not used for generating correct data packets from retrieved defective, i.e. incorrect, data packets.

### SUMMARY

A data processing device for correcting errors in at least one of a plurality of defective copies of a data packet, a method of operating a data processing device, as well as a corresponding computer program and non-transitory program storage device according to the appended claims are suggested, wherein an availability of multiple copies or instances of the same data packet (being subject to different disturbance or error patterns) is exploited.

According to one aspect of the present principles, a method of operating a data processing device to correct errors in at least one of a plurality of defective copies of a data packet comprises:
- obtaining, from a data transmission medium providing multiple copies of data packets, a plurality of defective copies of a data packet consisting of a sequence of code symbols at least representing payload data and error detection data;
- comparing the defective copies of said plurality, and if code symbols at corresponding positions within at least two of the defective copies differ from one another:
- identifying said corresponding positions of differing code symbols as a set of modification positions;
- computing a plurality of differently modified copies of said data packet from at least one of said defective copies by modifying code symbol values at said set of modification positions using different modification patterns and recalculating the error detection data;
- evaluating the recalculated error detection data; and
- selecting one of said differently modified copies where said evaluating indicates no error as a corrected copy of said data packet.

In one embodiment the corrected copy of the data packet is then provided to a data packet decoder device for further processing and decoding of the payload data. In another embodiment the corrected copy is stored in a memory for later processing.

A data processing device is or comprises, for example, a computer or other device capable of processing the data. The method may be implemented as part of or as a preprocessing for a data packet decoding in a decoder, wherein only defective data packets are supplied to the data processing device executing the described method, while otherwise, i.e. if at least one copy of the data packet is found correct, said correct copy is decoded by the data packet decoder device.

The transmission medium is, for example, a data storage or data communication channel, including means for storing/sending, i.e. writing, the data, and retrieving/receiving, i.e. reading, the data, wherein the data transmission medium can be error-prone. Since the transmission medium here provides multiple copies of the same original data packet, some or each of the copies may be defective or distorted, i.e. may contain erroneous code symbols that differ from the corresponding code symbols of the original, i.e. undisturbed, data packet.

A data packet in this context is a sequence of code symbols, i.e. a code word, at least comprising any kind of payload or user data and error detection data or check data computed for (at least a part of) the code word. Evaluation of the error detection data allows a determination whether or not the data packet is defective, i.e. contains at least one error, for example either derivable from the obtained error detection data itself or from comparison with corresponding originally generated error detection data.

The comparing of the defective copies of the data packet comprises position-wise comparing the code symbols at corresponding positions in the copies of the data packet, i.e. checking, if code symbols at corresponding positions within at least two of the defective copies differ from one another or, in other words, if at least one of the defective copies differs from the other defective copies, i.e. not all defective copies contain the same errors but there occur at least two different, individual error patterns within the plurality of defective copies of the same data packet.

The term "set" refers to a collection of one or more distinct items. The term "multiple" refers to a plurality of items.

The term "modification pattern" refers to a set of code symbol values applied to the corresponding code symbols of a (copy of) a data packet at the set of modification positions. The term "different modification patterns" refers to modification patterns differing from each other by at least one of the code symbol values.

The computed plurality of differently modified copies of the data packet at least comprises one copy without a modification and one with at least one modification.

In one embodiment, the computing of the plurality of differently modified copies is performed before the steps of evaluating and selecting, while in another embodiment said differently modified copies are computed, evaluated and possibly selected, one after the other, wherein that loop processing may end after a successful selection.

Accordingly, a data processing device for correcting errors in at least one of a plurality of defective copies of a data packet, comprises:
- an input module configured to obtain, from a data transmission medium providing multiple copies of data packets, a plurality of defective copies of a data packet consisting of a sequence of code symbols at least representing payload data and error detection data;
- a position identification module configured to compare the defective copies of said plurality, and if code symbols at corresponding positions within at least two of the defective copies differ from one another, to identify said corresponding positions of differing code symbols as a set of modification positions;
- a modification module configured to receive at least one of said defective copies and said set of modification positions and to compute a plurality of differently modified copies of said data packet from at least one of said defective copies by modifying code symbol values at said set of modification positions using different modification patterns and recalculating the error detection data;
- an evaluation module configured to evaluate the recalculated error detection data; and
- a selection module configured to select one of said differently modified copies where said evaluating indicates no error as a corrected copy of said data packet.

Different embodiments of the data processing device for correcting errors in at least one of a plurality of defective copies of a data packet are available: The input module, the position identification module, the modification module, the evaluation module and the selection module can be provided as separate devices or jointly as one device. The input module, the position identification module, the modification module, the evaluation module and the selection module may also be provided as functionality carried out or implemented by a processor, microprocessor, microcontroller or other processing device, computer or other programmable apparatus or processing assembly connected to or comprising a memory.

In one embodiment a data processing device for correcting errors in at least one of a plurality of defective copies of a data packet, comprises a processor assembly configured to:
- obtain, from a data transmission medium providing multiple copies of data packets, a plurality of defective copies of a data packet consisting of a sequence of code symbols at least representing payload data and error detection data;
- compare the defective copies of said plurality, and if code symbols at corresponding positions within at least two of the defective copies differ from one another:
- identify said corresponding positions of differing code symbols as a set of modification positions;
- compute a plurality of differently modified copies of said data packet from at least one of said defective copies by modifying code symbol values at said set of modification positions using different modification patterns and recalculating the error detection data;
- evaluate the recalculated error detection data; and
- select one of said differently modified copies where said evaluating indicates no error as a corrected copy of said data packet.

Accordingly, an apparatus for decoding data packets received from a data transmission medium providing multiple copies of data packets comprises
- a data processing device for correcting errors in at least one of a plurality of defective copies of a data packet according to the present principles, configured to transform at least one of the defective copies into a corrected copy of the data packet; and
- a decoding device configured to decode at least said corrected copy of the data packet.

Further, according to one aspect of the present principles, a computer program comprises code instructions executable by a processor for implementing a method according to the present principles.

According to another aspect of the present principles, a non-transitory program storage device, readable by a computer, tangibly embodies a program of instructions executable by the computer to perform a method for correcting errors in at least one of a plurality of defective copies of a data packet comprising:
- obtaining, from a data transmission medium providing multiple copies of data packets, a plurality of defective copies of a data packet consisting of a sequence of code symbols at least representing payload data and error detection data;
- comparing the defective copies of said plurality, and if code symbols at corresponding positions within at least two of the defective copies differ from one another:
- identifying said corresponding positions of differing code symbols as a set of modification positions;
- computing a plurality of differently modified copies of said data packet from at least one of said defective copies by modifying code symbol values at said set of modification positions using different modification patterns and recalculating the error detection data;
- evaluating the recalculated error detection data; and
- selecting one of said differently modified copies where said evaluating indicates no error as a corrected copy of said data packet.

For transmission/storage or during retrieval numerous copies of the initially created packets are generated. The packets processed here have been distorted such that an individual error pattern is applied to each copy of a data packet, leading to differently distorted data packet copies. The effects of the transmission/storing are summarized as "channel effects". The plurality of defective copies of a data packet refers to several packets containing the initially identical data which may now differ. Two or more received packets are compared and the positions of the differing symbols are detected. Then the differing code symbols, i.e. only the differing code symbols, and without any need for knowledge of possible complete correct code words/data packets themselves, are varied until the calculated error detection data is found correct, e.g. is identical to the transmitted error detection data.

The provided solution allows exploitation of an availability of multiple copies of the same data packet being subject to different disturbance or error patterns in error-prone data storage/transmission systems where said multiple copies are generated anyway, for example due to requirements by the employed technology, e.g. generation of multiple oligonucleotides, i.e. artificially created nucleic acid strands, for storing user or payload data in a DNA storage system, or due to characteristics of the employed transmission medium, e.g. multipath reception of the same transmitted signal in a wireless communication environment. The available multiple copies, even if disturbed, are used to derive the correct content from.

The provided approach at least has the effect that errors in retrieved data packets can be corrected without a need for applying an error correction encoding to the original data in order to be able to correct single erroneous data packets. Instead of applying a powerful error correction scheme requiring addition of many error correction encoding symbols for high redundancy to protect the data sufficiently, only an error detection scheme requiring less redundancy needs to be applied to the data packets. Furthermore, the calculation and evaluation of an error detection code is less computationally intense, retrieval of only defective copies is sufficient to derive the correct data packet from and the need to retrieve a correct data packet before decoding is avoided.

In one embodiment defective data packets are identified to belong to the plurality of defective copies of a same data packet if they comprise a common identifier: The sequence of code symbols a data packet consists of at least represents the payload data, the error detection data and, additionally, an identifier for identifying said data packet; and the obtaining of the plurality of defective copies comprises
- obtaining, from the transmission medium, multiple copies of data packets;
- evaluating the identifiers and the error detection data of the obtained multiple copies of data packets; and
- determining copies of data packets having a same identifier as the plurality of defective copies of a data packet, if the evaluation of the error detection data of each of said copies of data packets having the same identifier indicates at least one error. No extra information needs to be encoded, as the data packets will usually comprise an identifier anyway in order to enable ordered decoding of the data packets, independently of the presented error correction processing. Here, the identifier is used to determine the members of the plurality of defective copies of a data packet.

In one example embodiment the identifiers are encoded using an error correction coding, such as a Forward Error Correction (FEC) coding. Additional protection is added to the code symbols representing the identifier. The determining of copies of data packets as belonging to the same plurality of defective copies, thereby, becomes more reliable, as defective identifiers can be corrected.

In one embodiment the identifying, computing, evaluating and selecting are only performed if an amount of the code symbols at corresponding positions within at least two of the defective copies differing from one another is below an error threshold. This introduces an additional restriction to the plurality of defective copies of a data packet: If the amount of differing code symbols is above an error threshold, i.e. if too many code symbols within a data packet copy must be considered defective, the data packet copy is discarded or ignored and not added to the plurality of defective copies, as probably the copy belongs to a different data packet. This may, for example, be the case if the identifier is wrong or wrongly changed to a different correct identifier or cannot be corrected. The error threshold may depend on the length of, i.e. the amount or number of code symbols contained in, a data packet.

In one embodiment the computing, i.e. the computing of a plurality of differently modified copies of the data packet from at least one of said defective copies by modifying code symbol values at the set of modification positions using different modification patterns and recalculating the error detection data, comprises
- calculating code symbol value probabilities for the differing code symbols depending on values of the differing code symbols within the plurality of defective copies; and
- determining the different modification patterns by setting the differing code symbols to their most probable code symbol value, if the corresponding code symbol value probability exceeds a threshold range, and varying a value of at least one differing code symbol having a code symbol value probability not exceeding the threshold range.

A code symbol value probability may, for example, be calculated or computed depending on a frequency of occurrence of each possible code symbol value of the differing code symbols within the plurality of defective copies of the data packet to be corrected. For binary code symbols, the probability can directly be determined as the average value. The most probable value ("0" or "1 ") is then selected depending on whether or not the average value is found inside or outside of the threshold range. In other embodiments, the most probable value is determined, for example, based on a majority vote as the most often occurring value. If more than two incorrect versions, i.e. defective copies, of a data packet are available, the calculated probabilities are used to shorten the variation and recalculation process by prioritizing which of the differing symbols to vary first and to continue with the determination of other modification patterns only if a correct version cannot yet be found.

The threshold range encloses the least significant probability value. For example, for binary code symbols, i.e. bits, the least significant or least meaningful probability value is 0.5, i.e., only those defective bits with probabilities close to 0.5, that is, e.g. for bits, where as many zeros as ones were found, are varied, while the other defective bits are set to their most probable values. The probability is considered to be close to 0.5, if it is within a predetermined threshold range around 0.5. This may shorten the required time for calculation.

The determination of the significance or meaningfulness of a code symbol value probability depends on the order or value range of the used code symbols and may be defined as an absolute deviation of the code symbol value probability from its average. For example, for quaternary code symbols "0", "1 ", "2" and "3", the least significant code symbol value may be defined as 0.25.

Furthermore, in an embodiment where higher order code symbols are used, the variation may take into account priorities, which code symbol value to select first. For example, quaternary code symbols may be chosen depending on their probability: In a first variation the code symbol is set to its most probably value, in a second variation the code symbol is set to its second most probably value, in a third variation the code symbol is set to its third most probably value and in a fourth variation the code symbol is set to its least probably value. As an example, if for a differing quaternary code symbol of possible values "0", "1 ", "2" and "3" or "A", "C", "G" and "T" (corresponding to the nucleotides in nucleic acid strands used for DNA storage) the code symbol value has been found being "A" 20 times, "C" 10 times, "G" 2 times and "T" 0 times, the code symbol value will be set to "A" for the first variation, to "C" for the second variation, to "G" for the third variation and to "T" for the fourth variation, if necessary.

In an example embodiment, if none of said differently modified copies is selected as the corrected copy (because no recalculated error detection data indicates that the data packet is found to be correct), the threshold is adjusted and the computing, evaluating and selecting are repeated. The threshold is adjusted or changed to then additionally vary one or more of the code symbols previously constantly set to their most probable value.

In one embodiment the evaluating of the recalculated error detection data comprises comparing the recalculated error detection data with the error detection data contained in the obtained plurality of defective copies. The correctness information is derived from a comparison result whether or not the recalculated error detection data or check data, e.g. a unique checksum, is identical to the error detection data contained in the copies obtained from the transmission medium.

In another embodiment the evaluating of the recalculated error detection data comprises deriving a correctness information directly from the recalculated error detection data. In other words, the correctness information can be derived directly from the error detection data, thereby requiring no information on the correct error detection data. As an example, a parity bit used as error detection data for binary encoded data packets can be directly evaluated.

In other embodiments, both approaches are applied: For example, only if the comparison result and also the directly derivable correctness information indicate a correctness of the modified copy, the result is accepted. This may reduce a possible false acceptance rate.

In one embodiment the multiple copies of the data packet comprise an equal number of code symbols. If copies of different lengths are obtained from the transmission medium, copies of data packets of unusual lengths are, for example, rejected.

In one embodiment of the data processing device said device is connectable to a nucleic acid storage container and comprises a nucleic acid sequencer device configured to sequence multiple copies of nucleic acid molecules stored in said nucleic acid storage container to obtain multiple copies of data packets. In another embodiment the data processing device is connected to the nucleic acid sequencer device instead of comprising it.

A nucleic acid sequencer is a device for determining the sequence of nucleotides within a nucleic acid molecule, such as a DNA molecule. Data can be archived in synthetic DNA fragments, where the sequence of the nucleotides of different types represents the encoded user data. The biochemical processing requires that multiple, e.g. hundreds or thousands of copies of the same (initially identical) oligos or oligonucleotides, i.e. artificially created synthetic DNA strands, have to be generated for storing in a container and later sequencing and data retrieval. The process of storing data in synthesized DNA strands and sequencing the DNA strands to access the stored information can be error prone, wherein the error rate is usually high. According to the present principles, for DNA storage systems where oligos are amplified, i.e. replicated, hundreds or thousands of times anyway, often distorted, the need to detect a correct oligo before the decoding can be initiated is avoided. Thereby, the sequencing of the oligos and information retrieval will be faster, since disturbed oligo data can be used. Further, less redundancy is required within each data packet, as the addition of many error correction encoding symbols can be avoided.

In one embodiment of the data processing device said device is connectable to a wireless communication network and comprises a receiver device configured to receive multipath radio signals carrying multiple copies of transmitted data packets. The receiver device is subject to multipath reception of the same data packets. Here, copies of the initially sent data packet are usually not generated on purpose, but reflections and echoes of the sent radio signal carrying the transmitted data packets are received by a receiver device as multiple instances or copies of the initially sent signal, wherein each instance of the sent signal is subject to different distortion depending on the characteristics of the corresponding signal path.

While not explicitly described, the presented embodiments may be employed in any combination or sub-combination.

### BRIEF DESCRIPTION OF THE DRAWINGS

- Fig. 1: schematically illustrates an embodiment of a method of operating a data processing device to correct errors in at least one of a plurality of defective copies of a data packet;
- Fig. 2: schematically illustrates an example of obtaining the plurality of defective copies according to an embodiment of the method of operating a data processing apparatus to correct errors in at least one of a plurality of defective copies of a data packet;
- Fig. 3: schematically illustrates an example of computing a plurality of differently modified copies of the data packet from at least one of the defective copies according to an embodiment of the method of operating a data processing apparatus to correct errors in at least one of a plurality of defective copies of a data packet;
- Fig. 4: schematically illustrates a first example of an embodiment of a data processing device for correcting errors in at least one of a plurality of defective copies of a data packet;
- Fig. 5: schematically illustrates a second example of an embodiment of a data processing device for correcting errors in at least one of a plurality of defective copies of a data packet;
- Fig. 6: schematically illustrates a third example of an embodiment of a data processing device for correcting errors in at least one of a plurality of defective copies of a data packet;
- Fig. 7: schematically illustrates a fourth example of an embodiment of a data processing device for correcting errors in at least one of a plurality of defective copies of a data packet; and
- Fig. 8: schematically illustrates an embodiment of an apparatus for decoding data packets received from a data transmission medium providing multiple copies of data packets.

### DETAILED DESCRIPTION OF EMBODIMENTS

For a better understanding of the principles, example embodiments are explained in more detail in the following description with reference to the figures. It is understood that the present solution is not limited to these exemplary embodiments and that specified features can also expediently be combined and/or modified without departing from the scope of the present principles as defined in the appended claims. In the figures same or similar elements and features are referenced using the same reference numbers.

In the following, the processing will be explained often referring to an example, where the following 56 bit binary parcel or sequence of payload data is processed: 01010100101010100101010110101010101010101010011110101010. Four check bits or error detection bits are calculated that are appended at the end of the payload data to form the data packet:
01010100101010100101010110101010101010101010011110101010 0110.

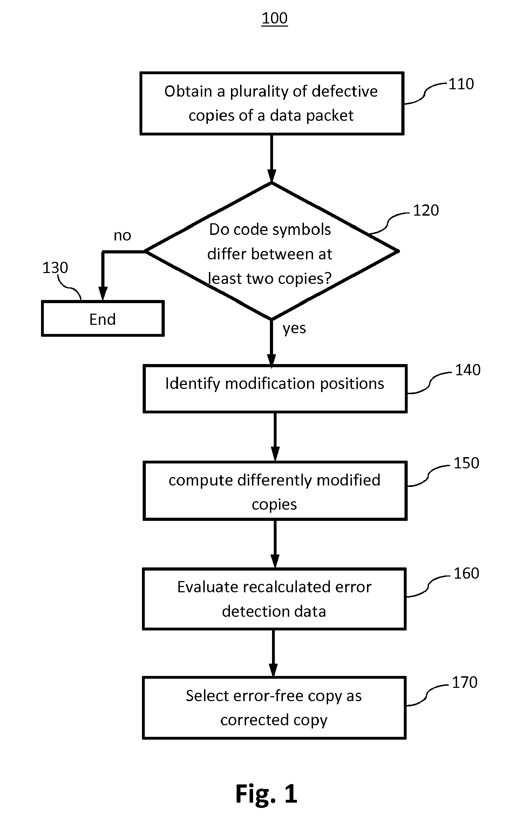

Referring to Fig. 1, an embodiment of a method 100 of operating a data processing device to correct errors in at least one of a plurality of defective copies of a data packet is schematically illustrated. The method may, for example, be computer implemented.

In the shown embodiment, in a first step 110 a plurality of defective copies of a data packet consisting of a sequence of code symbols at least representing payload data and error detection data are obtained from a data transmission medium providing multiple copies of data packets. Referring to the above-mentioned example of a data packet, for example two distorted versions, i.e. defective copies, of this package or data packet may be obtained:
01010100101010100111010110101010101010101010011110101010 0110,
01010100101010100101010110101010101010101010010110101010 0110.

In a next step 120 the defective copies of said plurality are compared, and if code symbols at corresponding positions within at least two of the defective copies differ from one another, the processing is continued with step 140. For the above-mentioned example of a data packet, by comparing the two defective copies of the data packets two locations are detected, where the copies differ (shown as "x"):
010101001010101001x101011010101010101010101001x1101010100110.
Therefore, the processing continues with step 140.

Otherwise, i.e. if the obtained defective copies of the data packet are all distorted according to the same error pattern, the correction processing ends 130, which may include, depending on the embodiment, receiving more copies of the data packet until either a correct one or a differently defective copy is obtained. If a correct copy is obtained, the error correction ends, otherwise the shown processing is repeated, now including the newly acquired defective copy. In other words, if the same code symbols are distorted in the obtained copies of the data packet, the error detection data indicates that there is an error, but the location of the error cannot be identified by comparing the copies of the data packet. In that case additional packets have to be checked, until any differences between the packets were found or until a correct data packet is found.

In a step 140 the corresponding positions of differing code symbols are identified as a set of modification positions.

In a next step 150 a plurality of differently modified copies of said data packet is computed from one of said defective copies by modifying code symbol values at said set of modification positions using different modification patterns and recalculating the error detection data. Instead of computing the differently modified copies from one of the defective copies, in another embodiment a representative defective copy is used for computing the differently modified copies from, wherein the representative copy is determined from two or more, e.g. all, of the defective copies.

According to the above-mentioned example, application of different modification patterns ("00", "01", "10", "11") results in a plurality of four differently modified copies before recalculating the error detection data:
01010100101010100101010110101010101010101010010110101010 0110,
01010100101010100101010110101010101010101010011110101010 0110,
01010100101010100111010110101010101010101010010110101010 0110, 01010100101010100111010110101010101010101010011110101010 0110.
Then the error detection data for each copy is recalculated.

If there are more than two locations with different data bits, there exist a higher number of versions that must be checked. In case of m found differences, the number of combinations to check is 2^{m} for binary data. In the case of non-binary code symbols, the number of combinations changes accordingly. For example, quaternary code symbols will require 4^{m} combinations to check. For example, for data storage with DNA strands the data are transformed into a sequence of quaternary code symbols and then encoded as a sequence of nucleotides (forming an oligo).

It should be noted, that the amount of combinations to check does not depend on the amount of code symbols within the data packet, i.e. on the amount of possible code words, but only on the amount of code symbols subject to change by the modification pattern, i.e. the differing code symbols.

For calculating error detection data, e.g. check bits, there exist several different approaches like error detection codes (e.g. CRC) or cryptographic hash functions (e.g. MD5, Sha1 etc). For all of them there exists a probability, that the check bits calculated by an encoder are identical with the check bits calculated for a disturbed or defective data packet. The probability for erroneously assuming that the error detection data calculated for a defective data packet is correct depends on the chosen algorithm. If the remaining error rate is too high for a given application, in an embodiment additional error correction codes can be applied.

In a next step 160 the recalculated error detection data is evaluated. Depending on the used error detection coding, in one embodiment the error detection data is directly evaluated or in another embodiment compared with the obtained error detection data.

In a next step 170 one of the differently modified copies where said evaluating indicates no error is selected as a corrected copy of said data packet. Only one of the four versions of the data packet according to the above-mentioned example will comprise correct error detection data.

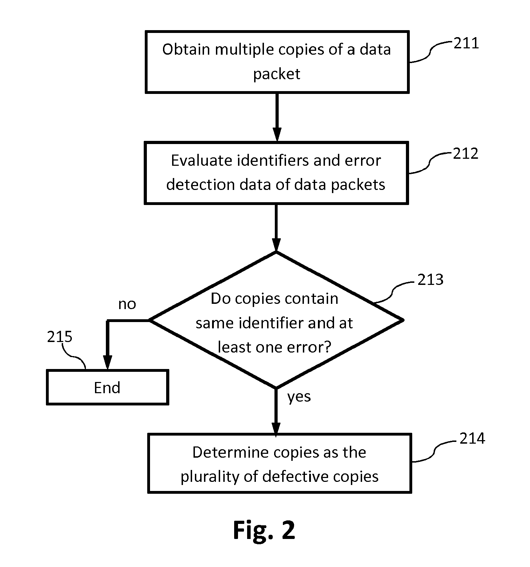

An example of the obtaining 110 of the plurality of defective copies according to an embodiment of the method of operating a data processing device to correct errors in at least one of a plurality of defective copies of a data packet is schematically illustrated in Fig. 2. Here, the sequence of code symbols at least represents the payload data, the error detection data and, additionally, an identifier for identifying the data packet.

Further, the obtaining of the plurality of defective copies comprises a first sub-step 211 of obtaining, from the transmission medium, multiple copies of data packets, i.e. not only a plurality of defective copies but, e.g., any data packet copy available.

In a next sub-step 212 the identifiers and the error detection data of the obtained multiple copies of data packets are evaluated, i.e. data packets containing same identifiers are determined as belonging together and may be determined to be either defective or correct.

If the evaluation of the error detection data of each of said copies of data packets having the same identifier indicates at least one error 213, said copies of data packets having a same identifier are determined 214 as the plurality of defective copies of a data packet.

Otherwise the processing ends 215. Depending on the embodiment this may include a different processing of the copies of data packets. For example, if a correct copy is found (e.g., by verifying the error detection data of the packet, e.g. by computing the error detection data of the packet in the same way as it was done on the encoding side), the data packet can be decoded. If the data packet copies are defective, but the identifiers differ, more data packet copies may be obtained until the evaluation 213 successfully allows determining a plurality of defective copies.

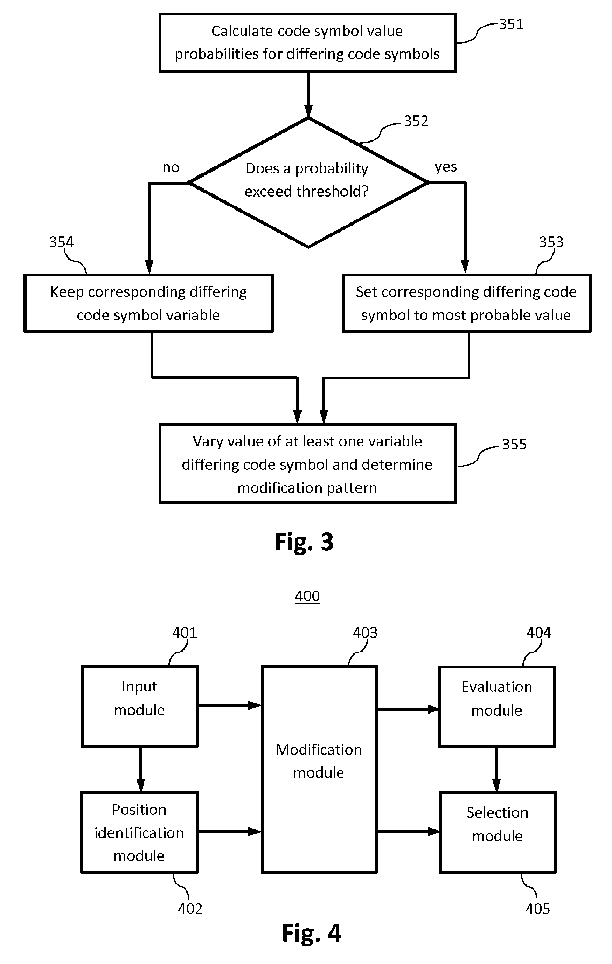

An example of the computing 150 of a plurality of differently modified copies of the data packet from one of the defective copies by modifying code symbol values at the set of modification positions using different modification patterns and recalculating the error detection data according to an embodiment of the method of operating a data processing apparatus to correct errors in at least one of a plurality of defective copies of a data packet is schematically illustrated in Fig. 3.

If more than two versions or copies of a distorted or defective data packet are available, it is possible to reduce the required number of calculations significantly by making majority decisions and/or prioritizations at locations of possibly defect code symbols. In a first sub-step 351 code symbol value probabilities are calculated for the differing code symbols depending on values of the differing code symbols within the plurality of defective copies.

If the corresponding code symbol value probability exceeds a threshold range 352, the different modification patterns are determined 353 by setting the differing code symbols to their most probable code symbol value. Otherwise, the corresponding code symbol values are kept variable 354.

In a next sub-step 355, a value of at least one differing code symbol having a code symbol value probability not exceeding the threshold range is varied and, as for each modification pattern a different variation is applied, a different modification pattern is determined as a combination of the varied code symbol values and the code symbol values set to their most probable value.

To further illustrate the processing described above, an example using a binary data packet or code word is given: At each location with differing bits the probability for the different bits is calculated. The searching for the correct data packet or code word is started by varying the bits with a probability near to 0.5, while the other bits are set to their most probable value. As an example, in the received defective copies of the data packet three bits with differing values were found (X,Y,Z):
01100X1010010Y101010010Z1001

For example, the probabilities P(0) and P(1) were measured as given in Table 1:

**Table 1**

| | P(0) | P(1) |
|---|---|---|
| X | 0.25 | 0.75 |
| Y | 0.45 | 0.55 |
| Z | 0.9 | 0.1 |

Z is set to "0", and X to "1", while for Y "1" is tested first and then "0".

If this does not succeed, the probability threshold range is increased until at least one more code symbol will be varied and not automatically set to its most probable value. For example, an increase of the threshold range to [0.2; 0.8] will additionally allow X to be varied, while Z remains set to its most probable value: X is set to "0" and Y is tested with "1" and "0". Finally, if none of the tests succeeded so far, Z will be set to "1" instead of "0", and the above mentioned tests are repeated. So the order of tests will be as shown in Table 2:

**Table 2**

| No. | X | Y | Z |
|---|---|---|---|
| 1 | 1 | 1 | 0 |
| 2 | 1 | 0 | 0 |
| 3 | 0 | 1 | 0 |
| 4 | 0 | 0 | 0 |
| 5 | 1 | 1 | 1 |
| 6 | 1 | 0 | 1 |
| 7 | 0 | 1 | 1 |
| 8 | 0 | 0 | 1 |

With the described approach it is possible to reduce or minimize the number of tests.

According to further aspects of the present principles, examples of an embodiment of a data processing device for correcting errors in at least one of a plurality of defective copies of a data packet are schematically shown in Fig. 4, Fig. 5, Fig. 6 and Fig. 7. The devices 400, 700 allow implementing the advantages and characteristics of the described method as part of a data processing device for correcting errors in at least one of a plurality of defective copies of a data packet.

The first example of an embodiment of a data processing device 400 for correcting errors in at least one of a plurality of defective copies of a data packet is shown in Fig. 4. It comprises an input module 401 configured to obtain, from a data transmission medium providing multiple copies of data packets, a plurality of defective copies of a data packet consisting of a sequence of code symbols at least representing payload data and error detection data.

The input module 401 is connected to a position identification module 402 configured to compare the defective copies of said plurality, and if code symbols at corresponding positions within at least two of the defective copies differ from one another, to identify said corresponding positions of differing code symbols as a set of modification positions.

A modification module 403 is connected to the input module 401 and the position identification module 402 and is configured to receive at least one of the defective copies and the set of modification positions and to compute a plurality of differently modified copies of said data packet from at least one of the defective copies by modifying code symbol values at said set of modification positions using different modification patterns and recalculating the error detection data.

An evaluation module 404 is configured to evaluate the recalculated error detection data, and a selection module 405 is connected to the evaluation module 404 and the modification module 403 and is configured to select one of the differently modified copies where the evaluating indicates no error as a corrected copy of the data packet.

In the embodiment shown in Fig. 4 the shown modules directly communicate with each other. In another embodiment the device comprises a controller module connected to one or more of the shown modules and controls their communication.

Depending on the embodiment, the input module 401, the position identification module 402, the modification module 403, the evaluation module 404 and the selection module 405 are provided as separate devices or jointly as one device. In one embodiment, one or more of the input module 401, the position identification module 402, the modification module 403, the evaluation module 404 and the selection module 405 are provided as functionality carried out or implemented by a processor, microprocessor, microcontroller or other processing device, computer or other programmable apparatus or processor assembly connected to or comprising a memory.

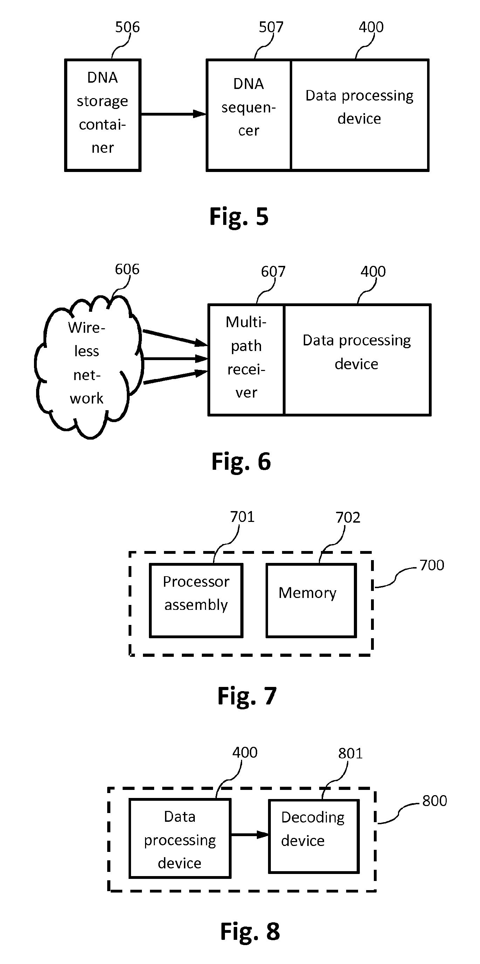

Referring to Fig. 5, a second example of an embodiment of a data processing device for correcting errors in at least one of a plurality of defective copies of a data packet is schematically illustrated. The data processing device mainly corresponds to the data processing device 400 shown in Fig. 4. Therefore, only additional components will be explained. The shown data processing device additionally comprises a nucleic acid sequencer device 507 configured to sequence multiple copies of nucleic acid molecules stored in a nucleic acid storage container to obtain multiple copies of data packets. It is connectable or connected to the nucleic acid storage container 506. In another embodiment the data processing device is connected to the nucleic acid sequencer device 507 instead of comprising it.

Referring to Fig. 6, a third example of an embodiment of a data processing device for correcting errors in at least one of a plurality of defective copies of a data packet is schematically illustrated. The data processing device mainly corresponds to the data processing device 400 shown in Fig. 4. Therefore, only additional components will be explained. The shown data processing device additionally comprises a receiver device 607 configured to receive multipath radio signals carrying multiple copies of transmitted data packets. It is connectable or connected to a wireless communication network 606. In another embodiment the data processing device is connected to the receiver device 607 instead of comprising it.

Referring to Fig. 7, a fourth example of an embodiment of a data processing device for correcting errors in at least one of a plurality of defective copies of a data packet is schematically illustrated. The shown data processing device 700 comprises a processor assembly 701 configured to:
- obtain, from a data transmission medium providing multiple copies of data packets, a plurality of defective copies of a data packet consisting of a sequence of code symbols at least representing payload data and error detection data;
- compare the defective copies of said plurality, and if code symbols at corresponding positions within at least two of the defective copies differ from one another:
- identify said corresponding positions of differing code symbols as a set of modification positions;
- compute a plurality of differently modified copies of said data packet from at least one of said defective copies by modifying code symbol values at said set of modification positions using different modification patterns and recalculating the error detection data;
- evaluate the recalculated error detection data; and
- select one of said differently modified copies where said evaluating indicates no error as a corrected copy of said data packet.

The shown data processing device 700 comprises the processor assembly 701 and a memory device 702 storing instructions that, when executed, cause the processor assembly to perform steps according to one of the described methods. In another embodiment the processor assembly 701 comprises the memory device 702.

As an example, the processor assembly 701 can be a processor adapted to perform the steps according to one of the described methods. In one embodiment according to the present principles, said adaptation comprises that the processor is configured, e.g. programmed, to perform steps according to one of the described methods of operating a data processing apparatus to correct errors in at least one of a plurality of defective copies of a data packet.

A part of the shown memory device 702 can be a non-transitory program storage device readable by the processor assembly 701, tangibly embodying a program of instructions executable by the processor assembly 701 to perform program steps as described herein according to the present principles.

Referring to Fig. 8, an embodiment of an apparatus 800 for decoding data packets received from a data transmission medium providing multiple copies of data packets is schematically shown. The apparatus 800 comprises a data processing device 400 which corresponds to the data processing device 400 shown in Fig. 4, for correcting errors in at least one of a plurality of defective copies of a data packet according to the present principles, configured to transform at least one of the defective copies into a corrected copy of the data packet. The apparatus 800 further comprises a decoding device 801 configured to decode at least the corrected copy of the data packet provided by the data processing device 400. In another embodiment the decoding device 801 comprises the data processing device 400 or vice versa.

Aspects of the present principles can be embodied as a method, an apparatus, a system, a computer program product or a computer readable medium, i.e. the present principles may be implemented in various forms of hardware, software, firmware, special purpose processors, or a combination thereof. Accordingly, aspects of the present principles can take the form of a hardware embodiment, a software embodiment or an embodiment combining software and hardware aspects. Aspects of the present principles may, for example, at least partly be implemented in a computer program comprising code portions for performing steps of the method according to an embodiment of the present principles when run on a programmable apparatus or enabling a programmable apparatus to perform functions of an apparatus, device or system according to an embodiment of the present principles. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more processors/central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device, as well as a sequencer device or receiver device. Unless stated otherwise, terms such as "first" and "second" are used to arbitrarily distinguish between the elements the terms describe and are not necessarily intended to indicate temporal or other prioritization of the elements. Any connection shown may be a direct connection or an indirect connection. Further, those skilled in the art will recognize that the boundaries between logic blocks are merely illustrative and that alternative embodiments may merge logic blocks or impose an alternate decomposition of functionality upon various logic blocks.

### CITATION LIST

[I] George M. Church, Yuan Gao, Sriram Kosuri, "Next-Generation Digital Information Storage in DNA", Science Vol. 337, 28 September 2012.
[II] Nick Goldman et al., "Towards practical, high-capacity, low-maintenance information storage in synthesized DNA", Nature Vol. 494, January 2013.

## Claims

1. A method (100) of operating a data processing device to correct errors in at least one of a plurality of defective copies of a data packet, comprising:
- obtaining (110), from a data transmission medium providing multiple copies of data packets, a plurality of defective copies of a data packet consisting of a sequence of code symbols at least representing payload data and error detection data;
- comparing (120) the defective copies of said plurality, and if code symbols at corresponding positions within at least two of the defective copies differ from one another,
- identifying (140) said corresponding positions of differing code symbols as a set of modification positions;
- computing (150) a plurality of differently modified copies of said data packet from at least one of said defective copies by modifying code symbol values at said set of modification positions using different modification patterns and recalculating the error detection data;
- evaluating (160) the recalculated error detection data; and
- selecting (170) one of said differently modified copies where said evaluating (160) indicates no error as a corrected copy of said data packet.

2. The method as claimed in claim 1, wherein said sequence of code symbols at least represents the payload data, the error detection data and an identifier for identifying said data packet; and wherein the obtaining (110) of the plurality of defective copies comprises
- obtaining (211), from the transmission medium, multiple copies of data packets;
- evaluating (212) the identifiers and the error detection data of the obtained multiple copies of data packets; and
- determining (214) copies of data packets having a same identifier as the plurality of defective copies of a data packet, if the evaluation of the error detection data of each of said copies of data packets having the same identifier indicates at least one error (213).

3. The method as claimed in claim 2, wherein the identifiers are encoded using an error correction coding.

4. The method as claimed in any of the preceding claims, wherein the identifying (140), computing (150), evaluating (160) and selecting (170) are only performed if an amount of the code symbols at corresponding positions within at least two of the defective copies differing from one another is below an error threshold.

5. The method as claimed in claim any of the preceding claims, wherein the computing (150) comprises
- calculating (351) code symbol value probabilities for the differing code symbols depending on values of the differing code symbols within the plurality of defective copies;
- determining (355) the different modification patterns by setting the differing code symbols to their most probable code symbol value (353), if the corresponding code symbol value probability exceeds a threshold (352), and varying a value of at least one differing code symbol having a code symbol value probability not exceeding the threshold range.

6. The method as claimed in claim 5, further comprising
- adjusting the threshold range and repeating the computing, evaluating and selecting, if none of said differently modified copies is selected as the corrected copy.

7. The method as claimed in any of the preceding claims, wherein the evaluating (160) of the recalculated error detection data comprises comparing the recalculated error detection data with the error detection data contained in the obtained plurality of defective copies.

8. The method as claimed in any of the preceding claims, wherein the evaluating (160) of the recalculated error detection data comprises deriving a correctness information directly from the recalculated error detection data.

9. The method as claimed in any of the preceding claims, wherein said multiple copies of the data packet comprise an equal number of code symbols.

10. A data processing device (400) for correcting errors in at least one of a plurality of defective copies of a data packet, comprising:
- an input module (401) configured to obtain, from a data transmission medium providing multiple copies of data packets, a plurality of defective copies of a data packet consisting of a sequence of code symbols at least representing payload data and error detection data;
- a position identification module (402) configured to compare the defective copies of said plurality, and if code symbols at corresponding positions within at least two of the defective copies differ from one another, to identify said corresponding positions of differing code symbols as a set of modification positions;
- a modification module (403) configured to receive at least one of said defective copies and said set of modification positions and to compute a plurality of differently modified copies of said data packet from at least one of said defective copies by modifying code symbol values at said set of modification positions using different modification patterns and recalculating the error detection data;
- an evaluation module (404) configured to evaluate the recalculated error detection data; and
- a selection module (405) configured to select one of said differently modified copies where said evaluating indicates no error as a corrected copy of said data packet.

11. The data processing device as claimed in claim 10, connectable to a nucleic acid storage container (506) and comprising a nucleic acid sequencer device (507) configured to sequence multiple copies of nucleic acid molecules stored in said nucleic acidstorage container (506) to obtain multiple copies of data packets.

12. The data processing device as claimed in claim 10, connectable to a wireless communication network (606) and comprising a receiver device (607) configured to receive multipath radio signals carrying multiple copies of transmitted data packets.

13. A computer program, comprising code instructions executable by a processor for implementing a method according to at least one of claims 1 to 9.

14. A non-transitory program storage device, readable by a computer, tangibly embodying a program of instructions executable by the computer to perform a method for correcting errors in at least one of a plurality of defective copies of a data packet comprising:
- obtaining (110), from a data transmission medium providing multiple copies of data packets, a plurality of defective copies of a data packet consisting of a sequence of code symbols at least representing payload data and error detection data;
- comparing (120) the defective copies of said plurality, and if code symbols at corresponding positions within at least two of the defective copies differ from one another:
- identifying (140) said corresponding positions of differing code symbols as a set of modification positions;
- computing (150) a plurality of differently modified copies of said data packet from at least one of said defective copies by modifying code symbol values at said set of modification positions using different modification patterns and recalculating the error detection data;
- evaluating (160) the recalculated error detection data; and
- selecting (170) one of said differently modified copies where said evaluating (160) indicates no error as a corrected copy of said data packet.

15. An apparatus (800) for decoding data packets received from a data transmission medium providing multiple copies of data packets comprises
- a data processing device (400) for correcting errors in at least one of a plurality of defective copies of a data packet according to any of claims 10 to 12, configured to transform at least one of the defective copies into a corrected copy of the data packet; and
- a decoding device (801) configured to decode at least said corrected copy of the data packet.
